# EUROPEAN PATENT SPECIFICATION

(11) **EP 3 993 388 B1**
(45) Date of publication and mention of the grant of the patent: **19.07.2023**
(21) Application number: 20859900.1
(22) Date of filing: 02.09.2020
(51) Int. Cl.: H04N 23/55, H04N 23/57, H04N 23/68, G03B 13/18, G03B 5/00, G02B 3/00

(54) **PHOTOGRAPHING MODULE AND TERMINAL DEVICE**
FOTOGRAFIERMODUL UND ENDGERÄT
MODULE DE PHOTOGRAPHIE ET DISPOSITIF TERMINAL

(30) Priority: 02.09.2019 CN 201910824574
(43) Date of publication of application: 04.05.2022
(73) Proprietor: GUANGDONG OPPO MOBILE TELECOMMUNICATIONS CORP., LTD., Dongguan, Guangdong 523860 (CN)
(72) Inventor: JIA, Yuhu, Dongguan, Guangdong 523860 (CN)
(74) Representative: Thorniley, Peter
(86) International application number: PCT/CN2020/112968
(87) International publication number: WO 2021/043156

(56) References cited:
- WO-A2-2010/114254
- CN-A- 101 694 543
- CN-A- 102 722 022
- CN-A- 102 967 932
- CN-A- 103 135 223
- CN-A- 110 557 535
- JP-A- 2006 064 949
- KR-A- 20130 128 495
- US-A1- 2009 252 485
- US-A1- 2018 003 947

## Description

### FIELD

The present disclosure relates to the technical field of electronic devices, and more particularly, to a camera module and a terminal device.

### BACKGROUND

For a common camera module, different shooting distances will cause an image-side focus of a lens group to offset to different degrees. Generally, in order to perform focusing, the camera module may adopt a voice coil motor configured to drive a lens barrel to move relative to an image sensor. However, such a structure occupies a relatively large volume, and due to a driving mode of the voice coil motor being mechanical drive, the structure is complex and liable to be damaged. US2009252485A1 provides an optical device includes a housing having first to fourth sidewalls and top and bottom plates, and (M-1) partitions between the first and second sidewalls to define M lens chambers, each filled with first and second liquids forming a liquid lens. A 3D image display system with high resolution is disclosed in CN102722022A. US2018/003947A1 and KR2013 0128495A are acknowledged as the relevant background art.

### SUMMARY

In view of the above problems, it is urgent to provide a camera module and a terminal device. The invention is set out in the appended set of claims.

A camera module includes a lens group including lenses, an optical array, and an image sensor arranged on an image side of the lens group and the optical array, and configured to receive light passing through the lens group and the optical array. The optical array includes a plurality of refractive elements arranged in an array. Each of the plurality of refractive elements includes a housing defining a chamber, electrodes, a first liquid, and a second liquid. The first liquid and the second liquid are filled in the chamber and are immiscible with each other. A refractive index of the first liquid is different from a refractive index of the second liquid. The electrode, when being energized, is capable of generating an electric field acting on at least one of the first liquid and the second liquid in the chamber to change an interface between the first liquid and the second liquid. The housing includes an upper wall, a lower wall, and a side wall. Two ends of the side wall are connected to the upper wall and the lower wall, respectively. The chamber is defined and enclosed by the upper wall, the lower wall, and the side wall. The electrode is arranged on an outer surface, facing away from the chamber, of at least one of the upper wall, the lower wall, or the side wall; and a hydrophobic layer configured to repel the first liquid is arranged on an inner surface, facing towards the chamber, of at least one of the upper wall, the lower wall, or the side wall.

A terminal device includes a device housing, and the above-mentioned camera module arranged in the device housing.

### BRIEF DESCRIPTION OF DRAWINGS

In order to clearly explain technical solutions of the embodiments of the present disclosure or in the related art, drawings used in the description of the embodiments or the related art are briefly described below. Obviously, the drawings described below merely illustrate some embodiments of the present disclosure. Based on these drawings, other drawings can be obtained by those skilled in the art without paying creative effort.
FIG. 1 is a schematic structural diagram of a camera module according to an embodiment of the disclosure.
FIG. 2 is a schematic structural diagram of an optical array of a camera module according to an embodiment of the disclosure.
FIG. 3 is a cross-sectional view taken along a direction A-A in FIG. 2.
FIG. 4 is a schematic structural diagram of a refractive element of a camera module according to an embodiment of the disclosure.
FIG. 5 is a schematic structural diagram of a refractive element of a camera module according to an embodiment of the disclosure.
FIG. 6 is a schematic diagram illustrating functions of an optical array of a camera module according to an embodiment of the disclosure.
FIG. 7 is a schematic structural diagram of a refractive element of a camera module according to an embodiment of the disclosure.
FIG. 8 is a schematic structural diagram of a refractive element of a camera module according to an embodiment of the disclosure.
FIG. 9 is a schematic structural diagram of a camera module according to an embodiment of the disclosure.
FIG. 10 is a schematic structural diagram of a camera module according to an embodiment of the disclosure.
FIG. 11 is a schematic structural diagram of a terminal device according to an embodiment of the disclosure.

### DESCRIPTION OF EMBODIMENTS

In order to facilitate the understanding of the present disclosure, the present disclosure is described thoroughly below with reference to the accompanying drawings. The accompanying drawings merely illustrate preferred embodiments of the present disclosure. Thus, the present disclosure can be implemented in many different forms and is not limited to the embodiments described herein. The embodiments are provided to facilitate thorough and comprehensive understanding of the present disclosure.

A "terminal device" used herein includes, but is not limited to, a device configured to receive and/or transmit communication signals via any one or more of the following connection manners: (1) wired line connection, such as a Public Switched Telephone Network (PSTN), a Digital Subscriber Line (DSL), a digital cable, or a direct cable connection; and (2) wireless interface, e.g., a cellular network, a Wireless Local Area Network (WLAN), a digital television network such as a Digital Video Broadcasting-Handheld (DVB-H) network, a satellite network, and an Amplitude Modulation-Frequency Modulation (AM-FM) broadcast transmitter.

A terminal device configured to communicate via the wireless interface may be referred to as a "mobile terminal". Examples of the mobile terminal include, but are not limited to: (1) a satellite phone or a cellular phone; (2) a Personal Communications System (PCS) terminal, which can combine a cellular radiotelephone with functions such as data processing, facsimile and data communication; (3) a radiotelephone, a pager, an Internet/Intranet access, a Web browser, a notepad, a calendar, or a Personal Digital Assistant (PDA) provided with a Global Positioning System (GPS) receiver; (4) a conventional laptop and/or palmtop receiver; and (5) a conventional laptop and/or palmtop radiotelephone transceiver, etc.

For a common camera module, different shooting distances may cause an image-side focus of a lens group to offset to different degrees. Generally, in order to perform focusing, the camera module adopts a voice coil motor configured to drive a lens barrel to move relative to an image sensor. However, such a structure occupies a relatively large volume, and due to a driving mode of the voice coil motor being mechanical drive, the structure is complex and liable to be damaged.

In this regard, the embodiments of the present disclosure provide a camera module and a terminal device to solve the above problems. The camera module according to the embodiments of the present disclosure can exert focusing and anti-shake functions without providing a mechanical moving part in the camera module, thereby reducing the size and structural complexity of the camera module, and allowing the camera module to be less vulnerable to damages.

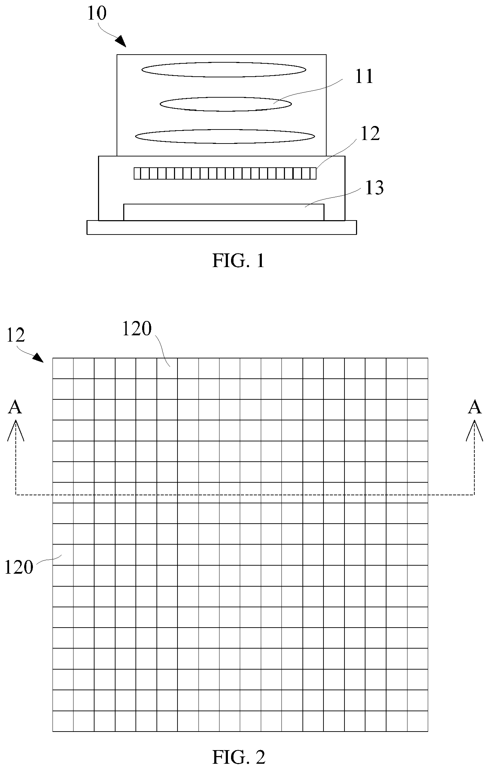

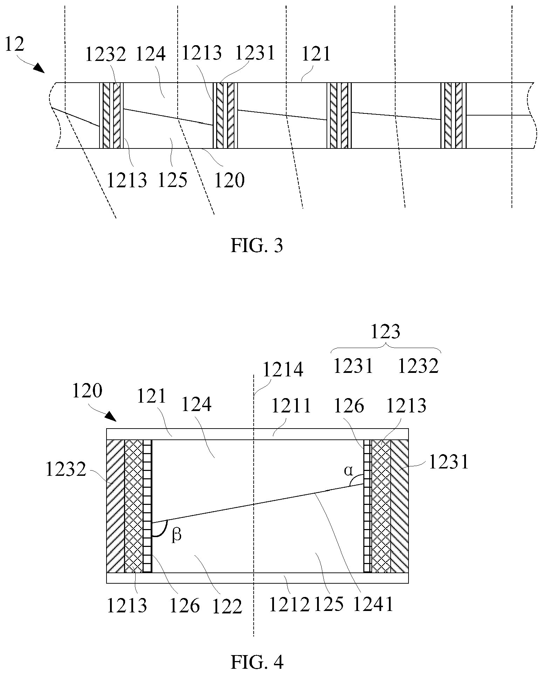

Referring to FIG. 1, FIG. 2 and FIG. 3, in an embodiment of the present disclosure, the camera module 10 includes a lens group 11, an optical array 12, and an image sensor 13, which are sequentially arranged from an object side to an image side. The optical array 12 includes a plurality of refractive elements 120 arranged in an array. Referring to FIG. 4, each refractive element 120 includes a housing 121 and electrodes 123, a chamber 122 is defined in the housing 121, and the first liquid 124 and the second liquid 125 that are immiscible with each other are filled in the chamber 122. A refractive index of the first liquid 124 is greater than a refractive index of the second liquid 125, and the first liquid 124 and the second liquid 125 have each a high transmittance to visible light. An interface 1241 can be generated between the first liquid 124 and the second liquid 125, and the incident light may be refracted when passing through the interface 1241. The electrodes 123 are arranged on the housing 121, and the first liquid 124 is a charged liquid, such that the electrodes 123 can drive the first liquid 124 to flow to change positions of the first liquid 124 and the second liquid 125 in the chamber 122.

In some embodiments, the electrode 123, when being energized, can form an electric field acting on at least one of the first liquid 124 and the second liquid 125 in the chamber 122, so as to change the interface 1241 between the first liquid 124 and the second liquid 125 as desired.

In the above camera module 10, by adjusting the electrodes 123 in each refractive element 120 to generate the electric field in the chamber 122, the first liquid 124 and the second liquid 125 in the chamber 122 can be distributed into desired positions. Thus, the interface 1241 between the first liquid 124 and the second liquid 125 can be maintained in a desired shape and inclination angle, such that the incident light can be deflected towards a desired direction when passing through the interface 1241 between the first liquid 124 and the second liquid 125.

By adjusting the electrode 123 in each refractive element 120, each refractive element 120 can deflect the incident light towards the desired direction. Additionally, since the optical array 12 includes the plurality of refractive elements 120 arranged in an array, the optical array 12 can control a deflection angle of the incident light incident to each region (i.e., each region corresponding to each refractive element 120). During shooting, when an image-side focus of the lens group 11, due to an offset thereof, cannot appropriately correspond to a receiving surface of the image sensor 13, the deflection direction of the incident light in each region can be changed by modulating the optical array 12, so as to exert the focusing function. On the other hand, when the shaking occurs in a process of shooting, the incident light can also be adjusted by modulating the plurality of refractive elements 120 to compensate for the offset of the focus, thereby exerting the anti-shake function. In addition, different from the conventional mechanical moving structure, the above-mentioned camera module 10 is simple in its structure, and can perform focusing and anti-shake without providing the mechanical moving part. In this way, the camera module 10 can be effectively prevented from being damaged during the mechanical movements, and the size of the camera module 10 can be reduced to facilitate a miniaturized design.

In some embodiments, the optical array 12 in the camera module 10 includes a substrate, which may be formed as one piece. A plurality of chambers 122 is defined in the substrate. These chambers 122 are spaced apart from each other and arranged in an array. Each chamber 122 on the substrate can be regarded as the chamber 122 of one refractive element 120 as described above. Further, a plurality of grooves may be formed on the substrate, the first liquid 124 and the second liquid 125 are injected into the grooves, and the grooves are sealed with a transparent curing glue to enable the grooves to form the above chamber 122. The transparent curing glue may be an ultraviolet (UV) glue. Alternatively, a side of the substrate where the grooves are formed may be attached with a cover plate to seal the grooves. A periphery structure of the substrate surrounding each chamber 122 and the transparent curing glue can be regarded as a chamber wall of the chamber 122, i.e., the housing 121 of the corresponding refractive element 120. The first liquid 124 and the second liquid 125 are filled in the chamber 122 and are immiscible with each other, the refractive index of the first liquid 124 is different from the refractive index of the second liquid 125, and an external electric field can act on at least one of the first liquid 124 and the second liquid 125 to change the interface 1241 between the first liquid 124 and the second liquid 125.

Further, in some embodiments, the optical array 120 includes a plurality of electrodes 123 that may be arranged in the grooves of the substrate described above or arranged on the cover plate attached to the substrate.

In the embodiments of the present disclosure, a material is considered to have a high transmittance to the visible light if it has a transmittance to the visible light greater than or equal to 70%. In addition, a density of the first liquid 124 is the same as a density of the second liquid 125, thereby minimizing an influence caused by shaking of the first liquid 124 and the second liquid 125. In this way, the flow of the first liquid 124 and the second liquid 125 in the chamber 122 may be as less as possible affected by the gravity, and thus can more rapidly respond to the effect exerted by the electrode 123. As an example, the density of the first liquid 124 is defined as ρ1, and the density of the second liquid 125 is defined as ρ2, and a density ratio ρ of the first liquid 124 to the second liquid 125 satisfies 0.8≤ρ≤1.2, for example, ρ can be 0.8, 0.9, 1.1, or 1.2. In addition, in order to enable the incident light to pass through both the first liquid 124 and the second liquid 125, a volume of the first liquid 124 can be approximately the same as a volume of the second liquid 125, e.g., a volume ratio of the first liquid 124 to the second liquid 125 may be within a range of 40% to 60%. In this way, it is less likely to occur that the first liquid 124 or the second liquid 125 is completely driven to an edge of the chamber 122 and thus a flat interface 1241 cannot be formed.

In addition to the density relation between the liquids, in some embodiments, a volume ratio k of the first liquid 124 to the second liquid 125 in the chamber 122 satisfies 0.8≤k≤1.2, and specifically, k may be 0.8, 0.9, 1, 1.1 or 1.2. When the chamber 122 is provided with hydrophobic layers on its two opposite sides perpendicular to a light incident direction, under an effect of the hydrophobic layers on the liquids in the chamber, the above design may allow the interface 1241 to extend to the hydrophobic layers on the two opposite sides described above, such that the incident light can pass through the interface 1241 as much as possible, thereby sufficiently adjusting the incident light. Further, in some embodiments, the volume ratio k can be as close to 1 as possible.

On the other hand, the number and a shape of the lenses in the lens group 11 are not limited to the example illustrated in FIG. 1, and a shape of the optical array 12 is not limited to the square structure illustrated in FIG. 2. In some embodiments, the shape of the optical array 12 may be a circle, an ellipse, a regular polygon, or the like.

Referring to FIG. 3 and FIG. 4, in this embodiment, the housing 121 of each refractive element 120 includes an upper wall 1211, a lower wall 1212, and a side wall 1213, and the chamber 122 is defined and enclosed by the upper wall 1211, the lower wall 1212, and the side wall 1213. The upper wall 1211 and the lower wall 1212 have a high transmittance to the visible light. The incident light can enter the chamber 122 through the upper wall 1211, and can be emitted out of the chamber 122 through the lower wall 1212 after passing through the first liquid 124 and the second liquid 125. In addition, the electrodes 123 include a first electrode 1231 and a second electrode 1232. Both the first electrode 1231 and the second electrode 1232 may be an Indium Tin Oxide (ITO) coating layer, or a conductive material such as a metal mesh. The first electrode 1231 and the second electrode 1232 are respectively arranged on two opposite sides of the side wall 1213, such that a transverse electric field can be generated in the chamber 122. That is, in the chamber 122, the first electrode 1231 and the second electrode 1232 can generate an electric field with a direction perpendicular to or nearly perpendicular to an axis 1214 of the housing 121, for example, an included angle between the electric field and the axis 1214 of the housing 121 ranges from 80° to 100°. The axis 1214 of the housing 121 can be regarded as a central axis of the housing 121, and the axis 1214 passes through the upper wall 1211 and the lower wall 1212.

In addition to arranging the electrode 123 on a side of the housing 121 facing away from the chamber 122, the electrode 123 can also be arranged on a side of the housing close to the chamber 122, or as a part of the chamber wall of the chamber 122. In some embodiments, an inner surface of the side wall 1213, i.e., a surface of the side wall 1213 close to the chamber 122, is a curved surface. In this case, the electrode 123 can be arranged around the chamber 122 along the curved surface, and the electrode 123 can be insulated from the liquids in the chamber.

In some embodiments, the first liquid 124 is a charged ionic liquid, and the second liquid 125 is an uncharged oily liquid. In this case, a voltage can be applied between the first electrode 1231 and the second electrode 1232 to drive the first liquid 124 to flow towards a predetermined direction and displace the second liquid 125, and finally, the first liquid 124 and the second liquid 125 are confined in a desired region of the chamber 122. Further, by controlling a voltage of the electrode 123, the interface 1241 between the first liquid 124 and the second liquid 125 can be kept flat and an angle between the interface 1241 and the side wall 1213 can be defined. In the embodiments of the present disclosure, the electrodes 123 in at least two refractive elements 120 can be controlled independently from each other. In some embodiments, the electrode 123 in each refractive element 120 in the optical array 12 can be independently controlled.

Therefore, by controlling the voltage of the electrode 123, the deflection direction of the incident light when passing through the interface 1241 can be adjusted to enable light incident on each refractive element 120 to be emitted out of the refractive element 120 in the desired direction, thereby endowing the camera module 10 with the focusing and anti-shake functions. In some embodiments, the second liquid 125 is actually neither limited to the oily liquid, nor limited to being uncharged, as long as the second liquid 125 and the first liquid 124 are immiscible with each other and the flat interface 1241 therebetween can be formed under an action of the electric field generated by the electrodes 123. For example, the second liquid 125 may be a charged liquid having a same electrical property but a different charge density, when compared to the first liquid 124. As an example, the first liquid 124 and the second liquid 125 are both positively charged liquids, and the charge density of the second liquid 125 is smaller than the charge density of the first liquid 124.

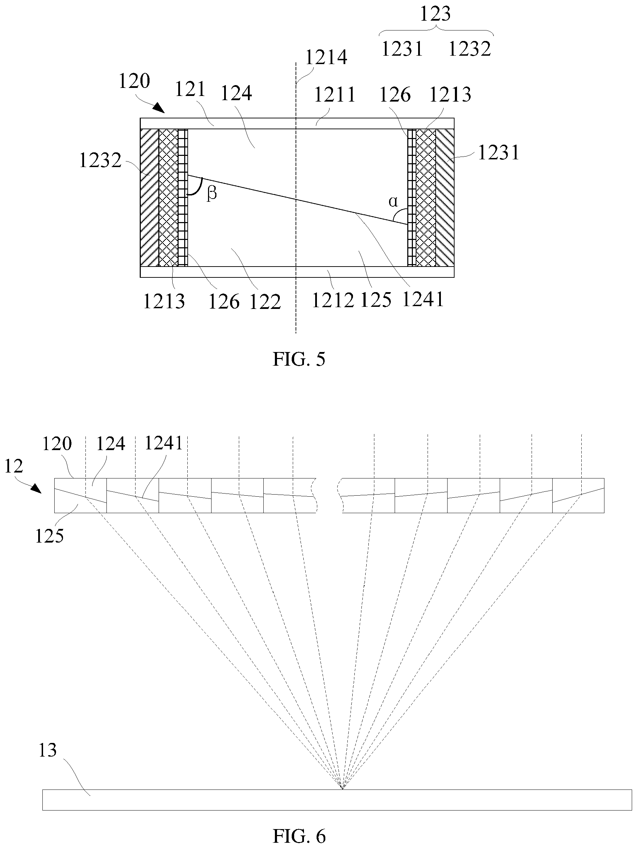

Specifically, referring to FIG. 4, when a potential of the first electrode 1231 is greater than a potential of the second electrode 1232, an angle α enclosed between the interface 1241 and the first electrode 1231 may be greater than an angle β enclosed between the interface 1241 and the second electrode 1232. In contrast, referring to FIG. 5, when the potential of the first electrode 1231 is smaller than the potential of the second electrode 1232, the angle α enclosed between the interface 1241 and the first electrode 1231 may be smaller than the angle β enclosed between the interface 1241 and the second electrode 1232. However, it should be noted that an inclination direction and an inclination angle of the interface 1241 in the chamber 122 actually depend on the electrical property of the first liquid 124 (such as positively or negatively charged), a position of the electrode 123 on the housing 121, and a voltage applied to the electrode 123. Therefore, in some embodiments, the first liquid 124 may be a negatively-charged ionic liquid instead of being a positively-charged ionic liquid. It should also be noted that the deflection angle of the incident light after passing through the interface 1241 is also related to the refractive indexes of the first liquid 124 and the second liquid 125.

Referring to FIG. 1 and FIG. 6, the refractive elements 120 are arranged in an array and form the optical array 12. In this case, by controlling the voltage applied to the electrodes 123 of the respective refractive elements 120, the inclination direction and the inclination angle of the interface 1241 in each refractive element 120 can be controlled to deflect the light incident on the refractive element 120, such that the light emitted from the optical array 12 can be focused on an effective pixel region of the image sensor 13 to exert an auto-focusing function. The image sensor 13 may be a Charge Coupled Device (CCD) or a Complementary Metal Oxide Semiconductor (CMOS).

Further, the optical array 12, due to its function of deflecting the light passing through the refractive elements 120, can also be configured to exert the anti-shake function. For example, when the shaking of the camera module 10 occurs and a focus of an image of a subject to be photographed on the image sensor 13 shifts upwards, a shake direction can be sensed by means of a gyroscope, and a voltage can be applied to the plurality of refractive elements 120 in the optical array 12 to change a propagation direction of incident image light after passing through the optical array 12. In this way, the focus of the image light can shift downwards to compensate the offset.

In combination with the above embodiments, by independently adjusting the electrodes 123 in the respective refractive elements 120, the camera module 10 can drive the first liquid 124 to flow, such that the first liquid 124 can drive the second liquid 125 to flow. In this case, the first liquid 124 and the second liquid 125 in the chamber 122 can be distributed to the desired positions to maintain the interface 1241 between the first liquid 124 and the second liquid 125 in a desired shape and at a desired inclination angle. In this way, the incident light can be deflected towards the desired direction when passing through the interface 1241 between the first liquid 124 and the second liquid 125. By adjusting the electrode 123 in each refractive element 120, each refractive element 120 can deflect the incident light towards the desired direction. In addition, since the optical array 12 includes the plurality of refractive elements 120 arranged in an array, the optical array 12 can control the deflection angle of the incident light incident to each region (each refractive element 120). In the process of shooting, when the image-side focus of the lens group 11 fails to be located in an expected position on the receiving surface of the image sensor 13 due to an offset, the optical array 12 arranged at the object side, in the inside, or at the image side of the lens group 11 can be modulated to change the deflection direction of the incident light in each region to enable the adjusted image-side focus to be located on the receiving surface of the image sensor, thereby exerting the focusing function. On the other hand, when the shaking occurs in the process of shooting, the incident light can also be adjusted by modulating the plurality of refractive elements 120 to compensate for the offset of the focus, thereby exerting the anti-shake function. In addition, different from the conventional mechanical moving structure, the above-mentioned camera module 10 has a simple structure, and can perform the focusing and anti-shake without providing the mechanical moving part. Therefore, the camera module 10 can be effectively prevented from being damaged during the mechanical movements of the mechanical moving part, and the size of the camera module 10 can be reduced to facilitate the miniaturized design of the camera module 10.

In addition, due to the difficulty in satisfyingly correcting the incident light by the conventional lens group 11, for light emitted out from the lens group 11, it is evitable that a focus of light close to the optical axis and a focus of light close to an edge are at different positions, i.e., a spherical aberration may occur. Therefore, by providing the optical array 12, the light emitted out from an edge region of the lens group 11 can be corrected by the optical array 12, such that the light emitted out from the edge region and light in a region close to the optical axis can be focused on the receiving surface of the image sensor 13, thereby correcting the spherical aberration and improving imaging quality.

Compared with the above embodiments, in some embodiments, the electrode 123 and the housing 121 can be spaced apart from each other. In some other embodiments, the electrode 123 may serve as the housing 100, and in this case, a side of the electrode 123 close to the first liquid 124 and the second liquid 125 is required to be covered with an insulating structure to prevent electrons in the electrode 123 from being transferred to the charged liquid. In this case, the insulating structure can serve as a part of the housing 121.

In some embodiments, the refractive element 120 includes a grounding member (not shown) arranged in the housing 121 and insulated from the electrode 123. The grounding member is configured to be grounded and can be in contact with at least one of the first liquid 124 and the second liquid 125. Specifically, the grounding member may be in contact with the ionic liquid, such that the ionic liquid and the grounding member can be in a conductive connection to change an overall charge amount of the ionic liquid. The grounding member may be regarded as a grounding electrode. In some embodiments, when the electrode is arranged on a side of the housing 121 close to the chamber 122, the electrode 123 may be covered with a film, e.g., a hydrophobic layer 126 as mentioned above. The film (not shown) has both insulativity and hydrophobicity, and is configured to insulate and separate the electrode 123 from the first liquid 124 and the second liquid 125, preventing the grounding member from being short-circuited with the electrode 123 through the ionic liquid. By controlling the potential on the electrode 123, a contact area between the ionic liquid and the film can be controlled, and further, a curvature of the interface 1241 can be controlled. It should be noted that the ionic liquid is conductive. In some embodiments, when no electric field is generated by the electrode 123 in the chamber 122, the ionic liquid in the chamber 122 is electrically neutral, and the ionic liquid may carry positive or negative electricity as a whole under an action of the grounding member depending upon on a state of the electric field generated by the electrode 123.

In some embodiments, the film may exhibit the hydrophobicity to the ionic liquid. That is, the film may have a repelling effect on conductive liquids, and have an affinity effect on oily liquids. One of the first liquid 124 and the second liquid 125 may be a conductive liquid, while the other one may be an oily liquid. In the following description, as an example, the first liquid 124 is the conductive liquid and the second liquid 125 is the oily liquid. In a natural state, the interface 1241 can be driven to stabilize at the desired position by the provided film, and the affinity effect between the conductive liquid and the film can be changed by adjusting the potential of the corresponding electrode 123, so as to change the contact area between the conductive liquid and the film, and further to control a change of the interface 1241. Thus, it is preferable to arrange the electrode 123 on a side opposite to a contact side between the film and the conductive liquid, allowing the electrode 123 to sufficiently act on the conductive liquid close to the contact surface between the film and the liquid. Therefore, in some embodiments, the film can be disposed between the conductive liquid and the electrode 123 in such a manner that the electrode 123 is arranged on a side of the housing 121 close to the chamber 122. That is, the electrode is arranged inside the chamber 122, and the film covers the electrode 123 to isolate the electrode 123 from the liquid in the chamber. In this case, the film is configured to insulate the electrode 123 from the liquid in the chamber. In some embodiment, the film can be disposed between the conductive liquid and the electrode 123 in such a manner that the film is located on the side of the housing 121 close to the chamber 122 and the electrode 123 is located on a side of the housing 121 facing away from the chamber 122.

Of course, in other embodiments, the electrode 123 may serve as a part of the chamber wall of the chamber 122, e.g., the chamber 122 is enclosed by the electrode 123 and the housing 121, as long as the electrode 123 is insulated from the liquid in the chamber 122.

Further referring to FIG. 5, in some embodiments, an inner surface of the side wall 1213, i.e., a surface on a side close to the chamber 122, is provided with the hydrophobic layer 126. The hydrophobic layer 126 has hydrophobicity to the first liquid 124. That is, the hydrophobic layer 126 exerts the repelling effect on the first liquid 124, while exhibiting the affinity to the second liquid 125. In other embodiments, the hydrophobic layer 126 may be arranged on at least one of the upper wall 1211 and the lower wall 1212, and it is necessary to ensure that the hydrophobic layer 126 can be in contact with the first liquid 124 and the second liquid 125. For example, the hydrophobic layer 126 is arranged on an inner surface of the upper wall 1211 (a surface on the side close to the chamber 122), or on an inner surface of the lower wall 1212 (a surface on the side close to the chamber 122). In some embodiments, as a material of the hydrophobic layer 126, the refractive element 120 may use polytetrafluoroethylene (PTFE), fluorinated polyethylene, fluorocarbon wax, or other synthetic fluoropolymers.

In some embodiments, the hydrophobic layer 126 and the electrode 123 are arranged in the same orientation and position of the housing 121. That is, the hydrophobic layer 126 and the electrode 123 can be together arranged on at least one of the upper wall 1211, the lower wall 1212, and the side wall 1213. For example, the electrode 123 can be arranged on a side of the upper wall 1211 facing away from the chamber 122, and the hydrophobic layer 126 can be arranged on a side of the upper wall 1211 close to the chamber 122.

When no voltage is applied to the electrode 123, by contacting the hydrophobic layer 126 with the second liquid 125, the hydrophobic layer 126 can stabilize a shape and a position of the second liquid 125 in the chamber 122 and further stabilize a shape and a position of the first liquid 124 in the chamber 122. In this case, by applying the voltage to the electrode 123, an electric field can be generated in the chamber 122 to drive the first liquid 124, thereby changing the position and the shape of the first liquid 124 in the chamber 122, such that the interface 1241 between the first liquid 124 and the second liquids 125 may become flat, and the inclination direction and the inclination angle of the interface 1241 may be changed.

In some embodiments, instead of arranging the electrode 123 on the outer surface of the side wall 1213, the electrode 123 may be arranged on an inner surface of the side wall 1213 (i.e., a surface of the side wall 1213 close to the chamber 122). In this case, the hydrophobic layer 126 can be further completely arranged on the surface of the electrode 123 to prevent the first liquid 124 and the second liquid 125 from contacting the electrode 123. The above arrangements enable the electrode 123 to be closer to the first liquid 124, and thus an intensity of the electric field generated by the electrode 123 in the chamber 122 can be increase to drive the first liquid 124 faster.

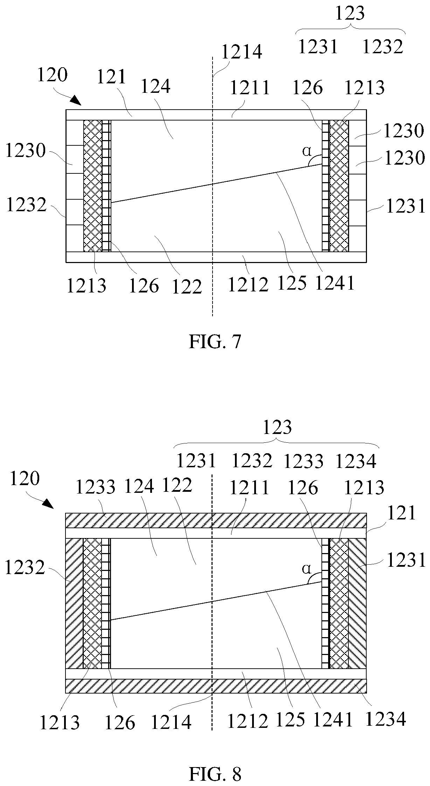

Referring to FIG. 7, in some embodiments, the electrode 123 includes a plurality of potential regions 1230, and the plurality of potential regions 1230 can generate an electric field with an intensity gradually changing in at least one of a longitudinal direction and a transverse direction of the chamber 122. Herein, the longitudinal direction of the chamber 122 can be regarded as a direction parallel to the axis 1214 of the housing 121. Specifically, in an embodiment, the first electrode 1231 and the second electrode 1232 are respectively arranged on two opposite sides of the side wall 1213, and each of the first electrode 1231 and the second electrode 1232 includes five potential regions 1230, among which adjacent potential regions 1230 are insulated from each other, and the respective potential regions 1230 can be electrically and independently controlled. In addition, an electric field can be generated between at least two potential regions 1230. However, it should be noted that the plurality of potential regions 1230 should be arranged in at least two electrodes located at different positions of the housing 121 (such as the first electrode 1231 and the second electrode 1232), in order to generate an electric field in the chamber 122 between the potential regions 1230 on the two electrodes. By applying a voltage between the potential region 1230 of the first electrode 1231 and the potential region 1230 of the second electrode 1232, an electric field perpendicular and/or inclined to the axis 1214 can be generated in the chamber 122, so as to facilitate rapid flow of the first liquid 124 in the chamber 122 to reach an equilibrium position.

Specifically, in an embodiment, the first liquid 124 is positively charged, and a voltage is applied between three potential regions 1230 closest to the upper wall 1211 in the first electrode 1231 and three potential regions 1230 closest to the lower wall 1213 in the second electrode 1232, so as to accumulate positive charges on the three potential regions 1230 closest to the upper wall 1211 in the first electrode 1231, and to accumulate negative charges on the three potential regions 1230 closest to the lower wall 1213 in the second electrode 1232. In this case, the electric field in the chamber 122 may approximately point from the potential regions 1230 close to the upper wall 1211 in the first electrode 1231 to the potential regions 1230 close to the lower wall 1213 in the second electrode 1232, thereby generating an inclined electric field. In other embodiments, when the electrode 123 is arranged on the upper wall 1211 and/or the lower wall 1212, the electrode 123 arranged on the upper wall 1211 and/or the lower wall 1212 may also be provided with a plurality of potential regions 1230 to form electric fields in the chamber 122 along different directions, e.g., an electric field parallel to, perpendicular to, or at any inclination angle with respect to the axis 1214. In this way, the flexibility of the flow of the first liquid 124 and the second liquid 125 can be increased to reach the equilibrium position faster.

A cross section of the refractive element 120 in a direction perpendicular to the axis 1214 may have a shape of rectangle, triangle, regular polygon (with an internal angle greater than 90°), etc. However, in principle, the shape of the cross section of the refractive element 120 should enable the plurality of refractive elements 120 to be arranged in a compact array, such that the incident light can enter a prism element as much as possible, and the incident light can be prevented from passing through a gap between the refractive elements 120.

The lens group 11 has an optical axis, which is an optical axis of lens, and the optical axis of the lens group 11 is parallel to the axis 1214 of each refractive element 120. When more than two lenses are provided, the lenses are arranged coaxially with respect to each other. In some embodiments, a projection of the refractive element 120 on a plane perpendicular to the optical axis has a shape of triangle or regular polygon. The plurality of refractive elements 120 is arranged in an array along the direction perpendicular to the optical axis, and the direction perpendicular to the optical axis includes multiple directions.

Specifically, in some embodiments, the refractive element 120 has a square structure. In this case, the outer wall surface of the side wall 1213 of the refractive element 120 can be divided into four portions, i.e., the side wall 1213 includes a first side wall, a second side wall, a third side wall, and a fourth side wall. The chamber 122 is enclosed by the first side wall, the second side wall, the third side wall, the fourth side wall, the upper wall 1211, and the lower wall 1212. The first side wall is adjacent and vertical to the second side wall and the fourth side wall, and the same is suitable for other side walls 1213. The first electrode 1231 is arranged on a side of the first side wall facing away from the chamber 122, and the second electrode 1232 is arranged on a side of the third side wall facing away from the chamber 122, such that the first electrode 1231 and the second electrode 1232 can form a transverse electric field along a normal direction of the first side wall and the third side wall in the chamber 122. In some embodiments, the electrode 123 is provided on the surface of each side wall 1213 facing away from the chamber 122. For example, the first side wall, the second side wall, the third side wall, and the fourth side wall are respectively provided with an electrode 123 on a side facing away from the chamber 122. In this case, the electrodes 123 can form, in the chamber 122, a transverse electric field along the normal direction of the first side wall and the third side wall as well as a transverse electric field along a normal direction of the second side wall and the fourth side wall.

In the above embodiments, the first side wall is opposite to the third side wall, the second side wall is opposite to the fourth side wall, the first electrode 1231 is arranged on the side of the first side wall facing away from the chamber 122, the second electrode 1232 is arranged on the side of the third side wall facing away from the chamber 122, the third electrode is arranged on the side of the second side wall facing away from the chamber 122, and the fourth electrode is arranged on the side of the fourth side wall facing away from the chamber 122. The first electrode and the second electrode, after being energized, can form a transverse electric field in the chamber 122, and the third electrode and the fourth electrode, after being energized, can form a transverse electric field in the chamber 122.

In some embodiments, the shape of the cross section of the refractive element 120 is a regular hexagon, and thus the outer wall surface of the side wall 1213 can be divided into six portions. Each portion of the wall surface (outer wall surface) of the side wall 1213 facing away from the chamber 122 is provided with an electrode 123, and the electrodes 123 arranged on two opposite portions of the side wall 1213 can form a transverse electric field in the chamber 122. That is, in this case, the hexagonal refractive element 120 can form the transverse electric fields in at least three directions. In this way, more electric field forces can be applied to the first liquid 124 to confine the first liquid 124 to more positions of the chamber 122 in various forms, and further, the interface 1241 can be inclined towards more directions to increase the selectivity of deflections of the incident light.

In some embodiments, adjacent refractive elements 120 can share a part of the side wall 1213, and the shared side wall 1213 can serve as a part of each of the housings 121 of adjacent refractive elements 120. In an embodiment, the shape of the cross sectional of the refractive element 120 is a regular polygon, and in the optical array 12, the adjacent refractive elements 120 share the sidewall 121. In this case, the electrodes 123 of these refractive elements 120 can be arranged on the upper wall 1211 and the lower wall 1212.

Referring to FIG. 8, in some embodiments of the present disclosure, in addition to the electrode 123 arranged on the side wall 1213, the electrode 123 may also be arranged on at least one of the upper wall 1211 and the lower wall 1212. When the electrode 123 is arranged on the upper wall 1211 or the lower wall 1212, the electrode 123 has a high transmittance to the visible light. In this case, by controlling the voltage applied to the electrode 123, the stronger electric fields in more directions can be generated in the chamber 122, so as to drive the first liquid 124 faster and allow the flat interface 1241 to be generated more accurately. It should be noted that, in some environments, the incident light should reach the image sensor 13 as much as possible. In this regard, the side wall 1213 and the electrode 123 arranged on the side wall 1213 shall each have a high transmittance to the visible light. In this case, a part of the incident light can enter one refractive element 120 from the side wall 1213 of another refractive element 120 and finally be emitted to the image sensor 13, or the incident light can directly enter the side wall 1213 of one refractive element 120 and emitted to the image sensor 13 from the same side wall 1213. It should be noted that the incident light may pass through the side wall 1213 in various manners, which are not described in detail herein. In some embodiments, the electrode 123 can be arranged on at least one of the upper wall 1211, the lower wall 1212, and the side wall 1213.

Similarly, in some embodiments, in order to improve utilization of the incident light and allow as much incident light as possible to reach the image sensor 13 to avoid an image being too dark, a length of the housing 121 along the direction of the axis 1214 is smaller than a length of the housing 121 along the direction perpendicular to the axis 1214. In this case, the incident light can pass through the refractive element 120 faster, and a propagation distance in the first liquid 124 and the second liquid 125 is shortened to reduce the loss of the incident light.

Specifically, in an embodiment, in addition to the first electrode 1231 and the second electrode 1232 arranged on the side wall 1213, a third electrode 1233 is arranged on the upper wall 1211 and a fourth electrode 1234 is arranged on the lower wall 1212. The third electrode 1233 is arranged on the side of the upper wall 1211 facing away from the chamber 122, and the fourth electrode 1234 is arranged on the side of the lower wall 1212 facing away from the chamber 122. The third electrode 1233 and the fourth electrode 1234 can form a longitudinal electric field parallel to the axis 1214 in the chamber 122. In practical applications, an inclined electric field may be generated between the first electrode 1231 and the third electrode 1233 or the fourth electrode 1234, and an inclined electric field may also be generated between the second electrode 1232 and the third electrode 1233 or the fourth electrode 1234.

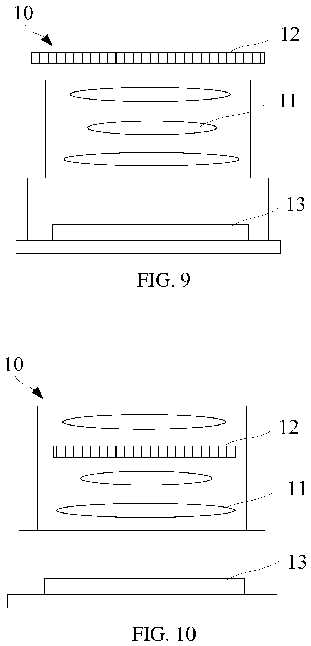

Referring to FIG. 9, in some embodiments, the optical array 12 is arranged on the object side of the lens group 11. In this case, the optical array 12 can directly perform a preliminary modulation on the incident light, and the modulated light enters the lens group 11. Since each refractive element 120 in the optical array 12 can deflect the propagation direction of the incident light, by adjusting the refractive elements 120 close to an edge of the optical array 12, light obliquely incident on the optical array 12 at a periphery of the camera module 10 can be refracted into the lens group 11 by the refractive elements 120 close to the edge. Thus, an object field angle of the camera module 10 can be increased, and further, the camera module 10 can be provided with a wide-angle characteristic. Meanwhile, through cooperation with the gyroscope, when the camera module 10 shakes in a certain direction, the optical array 12 can deflect the light incident from an original direction uniformly to compensate the offset. In addition, when the focus of the image light is not located on the image sensor 13, the refractive elements 120 in the optical array 12 can also be modulated by means of a processor to change the incident angle for the incident light to enter the lens group 11, thereby performing the focusing.

In addition, referring to FIG. 10, in some embodiments, the optical array 12 may be arranged inside the lens group 11, i.e., between the lenses. In view of the above embodiments, the optical array 12 can deflect the light incident on each refractive element 120 towards the desired direction, and thus the optical array 12 can serve as a lens with an adjustable curvature, e.g., a positive lens or a negative lens, for correcting various defects such as an aberration and a distortion caused by the lens group 11. In some embodiments, the lens group 11 includes at least two lenses, e.g., three lenses, four lenses, or more lenses, and the optical array 12 can be arranged between two adjacent lenses.

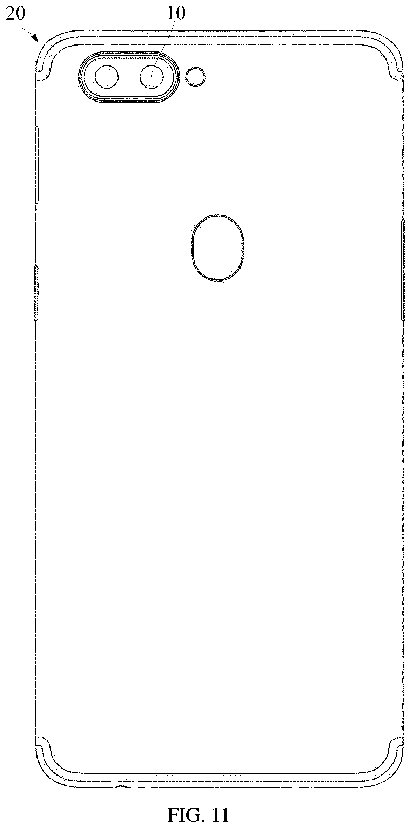

Referring to FIG. 11, in some embodiments of the present disclosure, the camera module 10 is applied in a terminal device 20 to endow the terminal device 20 with functions such as focusing and zooming. The terminal device 20 may be a smart phone, a notebook computer, a vehicle, a wearable device, etc., and the camera module 10 is mounted on a device housing of the terminal device 20. Smart phones, notebook computers, and the like can also be regarded as a type of mobile terminal.

Specifically, in an embodiment, the camera module 10 is applied in a smart phone and serves as a front camera module or a rear camera module of the smart phone. In this case, the camera module 10 is mounted on a middle frame of the smart phone. By adopting the camera module 10 according to the embodiments of the present disclosure, the terminal device 20 can adjust the propagation direction of the incident light passing through respective refractive element 120 by electrically controlling the plurality of refractive elements 120, thereby exerting the functions such as focusing and anti-shake, and correcting problems such as the aberration and the distortion of the lens group 11. In addition, the above-mentioned camera module 10 does not require to be provided with a mechanical moving part for the focusing or anti-shake, such that the camera module 10 can be prevented from being damaged during the mechanical movement of internal components. Further, since the above camera module 10 has a smaller size and a simpler structure than the conventional module provided with the mechanical moving part, which is conducive to the miniaturized design of the terminal device 20 and reduces the production cost.

## Claims

1. A camera module (10), comprising:
a lens group (11) comprising lenses;
an optical array (12) comprising a plurality of refractive elements (120) arranged in an array, each of the plurality of refractive elements (120) comprising a housing (121) defining a chamber (122), electrodes (123), a first liquid (124), and a second liquid (125); wherein the first liquid (124) and the second liquid (125) are filled in the chamber (122) and are immiscible with each other; a refractive index of the first liquid (124) is different from a refractive index of the second liquid (125); the electrode (123), when being energized, is capable of generating an electric field acting on at least one of the first liquid (124) and the second liquid (125) in the chamber (122) to change an interface (1241) between the first liquid (124) and the second liquid (125); and
an image sensor (13) arranged on an image side of the lens group (11) and the optical array (12), and configured to receive light passing through the lens group (11) and the optical array (12), wherein:
the housing (121) comprises an upper wall (1211), a lower wall (1212), and a side wall (1213);
two ends of the side wall (1213) are connected to the upper wall (1211) and the lower wall (1212), respectively; and
the chamber (122) is defined and enclosed by the upper wall (1211), the lower wall (1212), and the side wall (1213),
**characterized in that**,
the electrode (123) is arranged on an outer surface, facing away from the chamber (122), of at least one of the upper wall (1211), the lower wall (1212), or the side wall (1213); and
a hydrophobic layer (126) configured to repel the first liquid (124) is arranged on an inner surface, facing towards the chamber (122), of at least one of the upper wall (1211), the lower wall (1212), or the side wall (1213).

2. The camera module (10) according to claim 1, wherein the first liquid (124) is an ionic liquid, and the second liquid (125) is an oily liquid.

3. The camera module (10) according to claim 1, wherein the camera module (10) allows incident light to enter the chamber (122) from the upper wall (1211) and being emitted out of the chamber (122) from the lower wall (1212).

4. The camera module (10) according to claim 1, wherein the electrodes (123) comprise a first electrode (1231) and a second electrode (1232) that are arranged on two opposite sides of the side wall (1213), respectively; and the first electrode (1231) and the second electrode (1232), after being energized, are capable of generating an electric field in the chamber (122).

5. The camera module (10) according to claim 1, wherein the electrodes (123) comprise a third electrode (1233) arranged on the upper wall (1211) and a fourth electrode arranged on the lower wall (1212); and the third electrode (1233) and the fourth electrode, after being energized, are capable of generating an electric field in the chamber (122).

6. The camera module (10) according to claim 1, wherein the side wall (1213) comprises a first side wall, a second side wall, a third side wall opposite to the first side wall, and a fourth side wall opposite to the second side wall;
wherein the electrodes (123) comprise a first electrode (1231) arranged on the first side wall, a second electrode (1232) arranged on the third side wall, a third electrode (1233) arranged on the second side wall, and a fourth electrode arranged on the fourth side wall; and
wherein the first electrode (1231) and the second electrode (1232), after being energized, are capable of generating an electric field in the chamber (122), and the third electrode (1233) and the fourth electrode, after being energized, are capable of generating an electric field in the chamber (122).

7. The camera module (10) according to claim 1, wherein a ratio of a density ρ1 of the first liquid (124) to a density ρ2 of the second liquid (125) satisfies 0.8≤ρ1/ρ2≤1.2, and a volume ratio k of a volume of the first liquid (124) to a volume of the second liquid (125) in the chamber (122) satisfies 0.8≤k≤1.2.

8. The camera module (10) according to claim 1, wherein each of the plurality of refractive elements (120) comprises a grounding member in contact with at least one of the first liquid (124) and the second liquid (125), the grounding member being grounded.

9. The camera module (10) according to claim 1, wherein the optical array (12) is arranged between the lens group (11) and the image sensor (13).

10. The camera module (10) according to claim 1, wherein the lens group comprises at least two lenses, and the optical array (12) is arranged between two adjacent lenses of the at least two lenses of the lens group (11).

11. The camera module (10) according to claim 1, wherein the electrodes (123) in different refractive elements (120) of the plurality of refractive elements (120) are independently controllable.

12. A terminal device, comprising:
a device housing; and
the camera module (10) according to any one of claims 1 to 11,
wherein the camera module (10) is arranged in the device housing.

## Patentansprüche

1. Kameramodul (10), umfassend:
eine Linsengruppe (11), umfassend Linsen;
ein optisches Array (12), umfassend eine Vielzahl von Brechungselementen (120), die in einem Array angeordnet sind, wobei jedes der Vielzahl von Brechungselementen (120) ein Gehäuse (121), das eine Kammer (122) definiert, Elektroden (123), eine erste Flüssigkeit (124) und eine zweite Flüssigkeit (125) umfasst; wobei die erste Flüssigkeit (124) und die zweite Flüssigkeit (125) in die Kammer (122) gefüllt sind und nicht miteinander mischbar sind; ein Brechungsindex der ersten Flüssigkeit (124) sich von einem Brechungsindex der zweiten Flüssigkeit (125) unterscheidet; die Elektrode (123), wenn sie aktiviert wird, in der Lage ist, ein elektrisches Feld zu erzeugen, das auf mindestens eines von der ersten Flüssigkeit (124) und der zweiten Flüssigkeit (125) in der Kammer (122) so wirkt, dass eine Grenzfläche (1241) zwischen der ersten Flüssigkeit (124) und der zweiten Flüssigkeit (125) verändert wird; und
einen Bildsensor (13), der auf einer Bildseite der Linsengruppe (11) und dem optischen Array (12) angeordnet ist und dafür ausgelegt ist, Licht zu empfangen, das durch die Linsengruppe (11) und das optische Array (12) hindurchtritt, wobei:
das Gehäuse (121) eine obere Wand (1211), eine untere Wand (1212) und eine Seitenwand (1213) umfasst;
zwei Enden der Seitenwand (1213) mit der oberen Wand (1211) bzw. der unteren Wand (1212) verbunden sind; und die Kammer (122) durch die obere Wand (1211), die untere Wand (1212) und die Seitenwand (1213) definiert und umschlossen ist,
**dadurch gekennzeichnet, dass**
die Elektrode (123) an einer von der Kammer (122) abgewandten Außenfläche von mindestens einem von der oberen Wand (1211), der unteren Wand (1212) oder der Seitenwand (1213) angeordnet ist; und
eine hydrophobe Schicht (126), die dafür ausgelegt ist, die erste Flüssigkeit (124) abzustoßen, auf einer der Kammer (122) zugewandten Innenfläche von mindestens einem von der oberen Wand (1211), der unteren Wand (1212) oder der Seitenwand (1213) angeordnet ist.

2. Kameramodul (10) nach Anspruch 1, wobei die erste Flüssigkeit (124) eine ionische Flüssigkeit ist und die zweite Flüssigkeit (125) eine ölige Flüssigkeit ist.

3. Kameramodul (10) nach Anspruch 1, wobei das Kameramodul (10) einfallendes Licht von der oberen Wand (1211) in die Kammer (122) eintreten lässt und von der unteren Wand (1212) aus der Kammer (122) austreten lässt.

4. Kameramodul (10) nach Anspruch 1, wobei die Elektroden (123) eine erste Elektrode (1231) und eine zweite Elektrode (1232) umfassen, die jeweils auf zwei gegenüberliegenden Seiten der Seitenwand (1213) angeordnet sind; und die erste Elektrode (1231) und die zweite Elektrode (1232), nachdem sie aktiviert wurden, in der Lage sind, ein elektrisches Feld in der Kammer (122) zu erzeugen.

5. Kameramodul (10) nach Anspruch 1, wobei die Elektroden (123) eine dritte Elektrode (1233), die an der oberen Wand (1211) angeordnet ist, und eine vierte Elektrode, die an der unteren Wand (1212) angeordnet ist, umfassen; und die dritte Elektrode (1233) und die vierte Elektrode, nachdem sie aktiviert wurden, in der Lage sind, ein elektrisches Feld in der Kammer (122) zu erzeugen.

6. Kameramodul (10) nach Anspruch 1, wobei die Seitenwand (1213) eine erste Seitenwand, eine zweite Seitenwand, eine der ersten Seitenwand gegenüberliegende dritte Seitenwand und eine der zweiten Seitenwand gegenüberliegende vierte Seitenwand umfasst;
wobei die Elektroden (123) eine erste Elektrode (1231), die an der ersten Seitenwand angeordnet ist, eine zweite Elektrode (1232), die an der dritten Seitenwand angeordnet ist, eine dritte Elektrode (1233), die an der zweiten Seitenwand angeordnet ist, und eine vierte Elektrode, die an der vierten Seitenwand angeordnet ist, umfassen; und
wobei die erste Elektrode (1231) und die zweite Elektrode (1232), nachdem sie aktiviert wurden, in der Lage sind, ein elektrisches Feld in der Kammer (122) zu erzeugen, und die dritte Elektrode (1233) und die vierte Elektrode, nachdem sie aktiviert wurden, in der Lage sind, ein elektrisches Feld in der Kammer (122) zu erzeugen.

7. Kameramodul (10) nach Anspruch 1, wobei ein Verhältnis einer Dichte ρ1 der ersten Flüssigkeit (124) zu einer Dichte ρ2 der zweiten Flüssigkeit (125) 0,8 ≤ ρ1/ρ2 ≤ 1,2 erfüllt, und ein Volumenverhältnis k eines Volumens der ersten Flüssigkeit (124) zu einem Volumen der zweiten Flüssigkeit (125) in der Kammer (122) 0,8 ≤ k ≤ 1,2 erfüllt.

8. Kameramodul (10) nach Anspruch 1, wobei jedes der Vielzahl von Brechungselementen (120) ein Erdungselement umfasst, das mit mindestens einem von der ersten Flüssigkeit (124) und der zweiten Flüssigkeit (125) in Kontakt steht, wobei das Erdungselement geerdet ist.

9. Kameramodul (10) nach Anspruch 1, wobei das optische Array (12) zwischen der Linsengruppe (11) und dem Bildsensor (13) angeordnet ist.

10. Kameramodul (10) nach Anspruch 1, wobei die Linsengruppe mindestens zwei Linsen umfasst und das optische Array (12) zwischen zwei benachbarten Linsen der mindestens zwei Linsen der Linsengruppe (11) angeordnet ist.

11. Kameramodul (10) nach Anspruch 1, wobei die Elektroden (123) in verschiedenen Brechungselementen (120) der Vielzahl von Brechungselementen (120) unabhängig voneinander steuerbar sind.

12. Endgerät, umfassend:
ein Gerätegehäuse und
das Kameramodul (10) nach einem der Ansprüche 1 bis 11,
wobei das Kameramodul (10) im Gerätegehäuse angeordnet ist.

## Revendications

1. Module de caméra (10) comprenant :
un groupe de lentilles (11) comprenant des lentilles ;
un réseau optique (12) comprenant une pluralité d'éléments réfractifs (120) agencés en un réseau, chacun de la pluralité d'éléments réfractifs (120) comprenant un boîtier (121) définissant une chambre (122), des électrodes (123), un premier liquide (124) et un second liquide (125) ; le premier liquide (124) et le second liquide (125) remplissant la chambre (122) et n'étant pas miscibles l'un avec l'autre ; un indice de réfraction du premier liquide (124) étant différent d'un indice de réfraction du second liquide (125), l'électrode (123), lorsqu'elle est alimentée, étant capable de générer un champ électrique agissant sur au moins l'un du premier liquide (124) et du second liquide (125) dans la chambre (122) pour modifier une interface (1241) entre le premier liquide (124) et le second liquide (125), et
un capteur d'image (13) agencé sur un côté image du groupe de lentilles (11) et du réseau optique (12), et configuré pour recevoir la lumière passant à travers le groupe de lentilles (11) et le réseau optique (12),
le boîtier (121) comprenant une paroi supérieure (1211), une paroi inférieure (1212) et une paroi latérale (1213),
deux extrémités de la paroi latérale (1213) étant reliées à la paroi supérieure (1211) et à la paroi inférieure (1212), respectivement ; et
la chambre (122) étant définie et entourée par la paroi supérieure (1211), la paroi inférieure (1212) et la paroi latérale (1213),
**caractérisé en ce que**,
l'électrode (123) est agencée sur une surface extérieure, orientée à l'opposé de la chambre (122), d'au moins une de la paroi supérieure (1211), de la paroi inférieure (1212) ou de la paroi latérale (1213), et
une couche hydrophobe (126) configurée pour repousser le premier liquide (124) est agencée sur une surface intérieure, orientée vers la chambre (122), d'au moins l'une de la paroi supérieure (1211), de la paroi inférieure (1212) ou de la paroi latérale (1213).

2. Module de caméra (10) selon la revendication 1, le premier liquide (124) étant un liquide ionique, et le second liquide (125) étant un liquide huileux.

3. Module de caméra (10) selon la revendication 1, le module de caméra (10) permettant à la lumière incidente de pénétrer dans la chambre (122) par la paroi supérieure (1211) et d'être émise hors de la chambre (122) par la paroi inférieure (1212).

4. Module de caméra (10) selon la revendication 1, les électrodes (123) comprenant une première électrode (1231) et une deuxième électrode (1232) qui sont agencées sur deux côtés opposés de la paroi latérale (1213), respectivement ; et la première électrode (1231) et la deuxième électrode (1232), après avoir été alimentées, étant capables de générer un champ électrique dans la chambre (122).

5. Module de caméra (10) selon la revendication 1, les électrodes (123) comprenant une troisième électrode (1233) agencée sur la paroi supérieure (1211) et une quatrième électrode agencée sur la paroi inférieure (1212), et la troisième électrode (1233) et la quatrième électrode, après avoir été alimentées, étant capables de générer un champ électrique dans la chambre (122).

6. Module de caméra (10) selon la revendication 1, la paroi latérale (1213) comprenant une première paroi latérale, une deuxième paroi latérale, une troisième paroi latérale opposée à la première paroi latérale et une quatrième paroi latérale opposée à la deuxième paroi latérale ;
les électrodes (123) comprenant une première électrode (1231) agencée sur la première paroi latérale, une deuxième électrode (1232) agencée sur la troisième paroi latérale, une troisième électrode (1233) agencée sur la deuxième paroi latérale et une quatrième électrode agencée sur la quatrième paroi latérale ; et
la première électrode (1231) et la deuxième électrode (1232), après avoir été alimentées, étant capables de générer un champ électrique dans la chambre (122), et la troisième électrode (1233) et la quatrième électrode, après avoir été alimentées, étant capables de générer un champ électrique dans la chambre (122).

7. Module de caméra (10) selon la revendication 1, un rapport d'une densité ρ1 du premier liquide (124) à une densité ρ2 du second liquide (125) satisfaisant 0,8 ≤ ρ1/ρ2 ≤ 1,2, et un rapport de volume k d'un volume du premier liquide (124) à un volume du second liquide (125) dans la chambre (122) satisfaisant 0,8 ≤ k ≤ 1,2.

8. Module de caméra (10) selon la revendication 1, chacun de la pluralité d'éléments réfractifs (120) comprenant un élément de mise à la terre en contact avec au moins l'un du premier liquide (124) et du second liquide (125), l'élément de mise à la terre étant mis à la terre.

9. Module de caméra (10) selon la revendication 1, le réseau optique (12) étant agencé entre le groupe de lentilles (11) et le capteur d'image (13).

10. Module de caméra (10) selon la revendication 1, le groupe de lentilles comprenant au moins deux lentilles, et le réseau optique (12) étant agencé entre deux lentilles adjacentes des au moins deux lentilles du groupe de lentilles (11).

11. Module de caméra (10) selon la revendication 1, les électrodes (123) dans différents éléments réfractifs (120) de la pluralité d'éléments réfractifs (120) étant contrôlables indépendamment.

12. Dispositif terminal comprenant
un boîtier de dispositif ; et
le module de caméra (10) selon l'une quelconque des revendications 1 à 11,
le module de caméra (10) étant agencé dans le boîtier de dispositif.
